# FASCICULE DE BREVET EUROPEEN

(11) **EP 2 524 125 B1**
(45) Date de publication et mention de la délivrance du brevet: **07.12.2016**
(21) Numéro de dépôt: 11704650.8
(22) Date de dépôt: 17.01.2011
(51) Int. Cl.: F01P 7/16, F16K 3/24, F16K 11/044, F01P 7/14

(54) **DISPOSITIF DE VANNE A TIROIR ET CIRCUIT COMPRENANT UNE TELLE VANNE**
SCHIEBEVENTIL UND SCHALTUNG MIT EINEM DERARTIGEN VENTIL
SLIDE-VALVE DEVICE AND CIRCUIT INCLUDING SUCH A VALVE

(30) Priorité: 13.01.2010 FR 1050210
(43) Date de publication de la demande: 21.11.2012
(73) Titulaire: Mark IV Systemes Moteurs (Société Par Actions Simplifée), 92300 Levallois-Perret (FR)
(72) Inventeur: KOMURIAN, Richard, F-68230 Turckheim (FR); ADAM, Christian, F-68000 Colmar (FR)
(74) Mandataire: Nuss, Laurent
(86) Numéro de dépôt international: PCT/FR2011/050076
(87) Numéro de publication internationale: WO 2011/086335

(56) Documents cités:
- EP-A1- 1 903 265
- EP-A2- 2 280 205
- GB-A- 1 155 115
- JP-A- 2008 255 852

## Description

La présente invention concerne le domaine de la distribution et de la circulation contrôlées de fluide, plus particulièrement liquide, dans un circuit complexe, par exemple à plusieurs boucles partiellement parallèles et mutuellement imbriquées ou interconnectées, comprenant des portions communes, telles que les circuits de circulation du liquide de refroidissement de moteurs à combustion interne de véhicules automobiles.

La présente invention a pour objet, dans le contexte susvisé, un dispositif de vanne à tiroir coulissant, régulant au moins deux voies en sortie, et un circuit de refroidissement comprenant un tel dispositif de vanne.

Compte tenu des impératifs de réduction des coûts de revient des volumes disponibles et du poids total, qui prévalent de nos jours particulièrement dans le domaine de la construction automobile, il existe une demande forte pour réduire le nombre d'organes de régulation et de contrôle de la circulation de fluide dans les circuits complexes.

Dans la mesure du possible, on recherche notamment à intégrer toutes les fonctions de régulation et de contrôle en un ensemble fonctionnel et structurel unique, commandé par un unique actionneur, aboutissant ainsi à un noeud de régulation unique pour plusieurs portions de circuit d'un même circuit général, par exemple un circuit de refroidissement.

Une possibilité supplémentaire de réduction des coûts consiste à mettre enoeuvre des actionneurs à faible prix de revient, donc à structure simple et peu sophistiqués, par exemple rotatifs ou linéaires.

Un double problème se présente alors, à savoir, le raccordement spatial des différentes portions de circuit au niveau du noeud (problème d'encombrement) et la réalisation des différentes régulations pour les différentes portions de circuit en respectant leur hiérarchie, leurs fonctions et leurs conditions de réalisation, fonction de la régulation général au niveau du circuit global.

Les problèmes évoqués ci-dessus se présentent notamment dans le cadre de la régulation, au moyen d'un dispositif structurel ou module unique, de la circulation du liquide de refroidissement dans un circuit comprenant une portion principale et trois portions secondaires, à savoir, par exemple, en plus du circuit traversant le bloc moteur, également une boucle passant par un radiateur, une boucle passant par un aérotherme, ainsi qu'une boucle de dérivation.

Par les documents FR 2 906 334 et FR 2 906 335, on connaît déjà des unités de vanne répondant sensiblement aux différentes attentes exprimées ci-dessus.

La présente invention vise à proposer un dispositif de vanne amélioré, présentant une constitution plus simple et robuste et permettant d'obtenir des fuites plus faibles en position d'obturation.

A cet effet, la présente invention a pour objet un dispositif de vanne à tiroir coulissant selon une direction axiale donnée, ledit dispositif de vanne comprenant un corps de vanne avec deux chambres mutuellement communicantes et contiguës dans la direction axiale, la première chambre comportant une première ouverture latérale d'entrée de fluide et une seconde ouverture de sortie de fluide, située sensiblement à l'opposée de l'ouverture de communication avec la seconde chambre et pourvue d'un dispositif d'obturation normalement fermé et à ouverture conditionnelle, la seconde chambre comportant une première et une seconde ouvertures latérales de sortie de fluide mutuellement décalées dans la direction axiale et débouchant respectivement dans des première et seconde régions ou zones volumiques intérieures distinctes de ladite seconde chambre et le tiroir coulissant étant guidé en translation dans ladite seconde chambre et mobile sous l'effet d'un actionneur à commande contrôlée,
dispositif de vanne caractérisé en ce que les deux régions intérieures de ladite seconde chambre sont arrangées de manière contiguë dans la direction axiale et communiquent entre elles par l'intermédiaire d'une ouverture ou d'un passage interne, et, en ce que le tiroir coulissant comprend, d'une part, un premier organe d'obturation apte à obturer sélectivement, dans deux positions de coulissement extrêmes opposées du tiroir et par compression d'un joint correspondant respectif, l'ouverture de communication entre les première et seconde chambres ou l'ouverture ou le passage de communication interne entre les deux régions de la seconde chambre, et, d'autre part, un second organe d'obturation apte à empêcher la communication fluidique entre la seconde ouverture latérale de sortie de fluide de la seconde chambre et la première région de ladite seconde chambre, ce dans une plage déterminée de translation du tiroir coulissant depuis sa position extrême d'obturation de l'ouverture de communication entre les deux chambres.

L'invention sera mieux comprise, grâce à la description ci-après, qui se rapporte à des modes de réalisation préférés, donnés à titre d'exemples non limitatifs, et expliqués avec référence aux dessins schématiques annexés, dans lesquels :
La figure 1 est une vue en coupe simplifiée représentant de manière schématique les principales composantes constitutives d'un dispositif de vanne selon l'invention ;
La figure 2 est une vue éclatée en perspective d'un dispositif de vanne selon un premier mode de réalisation pratique de l'invention ;
Les figures 3A à 3D sont des vues en coupe d'un dispositif de vanne tel que représenté sur la figure 2, à l'état assemblé, illustrant quatre positions du tiroir coulissant correspondant à quatre états différents dudit dispositif de vanne ;
La figure 4 est une vue en perspective de deux pièces (tiroir et chemise) faisant partie du dispositif de vanne représenté aux figures 2 et 3, et,
La figure 5 est une vue éclatée en perspective d'un dispositif de vanne selon un second mode de réalisation pratique de l'invention.

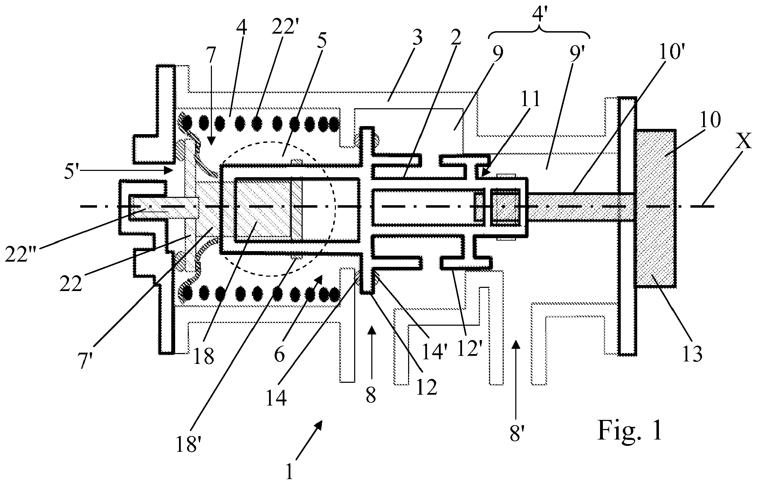

Les figures 1, 2, 3 et 5 montrent un dispositif 1 de vanne à tiroir coulissant selon une direction axiale X donnée.

Ce dispositif de vanne 1 comprend un corps de vanne 3 avec deux chambres 4, 4' mutuellement communicantes et contiguës dans la direction axiale X, la première chambre 4 comportant une première ouverture latérale 5 d'entrée de fluide et une seconde ouverture 5' de sortie de fluide, située sensiblement à l'opposée de l'ouverture de communication 11 avec la seconde chambre 5' et pourvue d'un dispositif 7 d'obturation normalement fermé et à ouverture conditionnelle. De plus, la seconde chambre 4' comporte une première 8 et une seconde 8' ouvertures latérales de sortie de fluide mutuellement décalées dans la direction axiale X et débouchant respectivement dans des première 9 et seconde 9' régions ou zones volumiques intérieures distinctes de ladite seconde chambre 4' et le tiroir coulissant 2 est guidé en translation dans ladite seconde chambre 4' et mobile sous l'effet d'un actionneur 10 à commande contrôlée.

Conformément à l'invention, les deux régions intérieures 9 et 9' de ladite seconde chambre 4' sont arrangées de manière contiguë dans la direction axiale X et communiquent entre elles par l'intermédiaire d'une ouverture ou d'un passage interne 11, et, le tiroir coulissant 2 comprend, d'une part, un premier organe d'obturation 12 apte à obturer sélectivement, dans deux positions de coulissement extrêmes opposées du tiroir 2 et par compression d'un joint correspondant 14, 14' respectif, l'ouverture de communication 6 entre les première et seconde chambres 4 et 4' ou l'ouverture ou le passage de communication interne 11 entre les deux régions 9 et 9' de la seconde chambre 4', et, d'autre part, un second organe d'obturation 12' apte à empêcher la communication fluidique entre la seconde ouverture latérale de sortie de fluide 8' de la seconde chambre 4' et la première région 9 de ladite seconde chambre 4', ce dans une plage déterminée de translation du tiroir coulissant 2 depuis sa position extrême d'obturation de l'ouverture de communication 6 entre les deux chambres 4 et 4'.

Le dispositif de vanne 1 comprend ainsi un premier moyen de régulation (tiroir coulissant 2) commandé par un actionneur 10 pour contrôler simultanément deux sorties de fluide 8 et 8'. Il comprend également un second moyen de régulation (dispositif d'obturation 7) à commande autonome, dont l'état peut dépendre directement d'un paramètre de commande, par exemple de la température du fluide circulant dans la première chambre 4.

En outre, le tiroir coulissant 2 forme un organe de régulation double, contrôlant la circulation de fluide au niveau de deux ouvertures internes du corps de vanne 3 et, de ce fait, entre trois volumes internes de ce dernier (première chambre 4 et première et seconde régions 9 et 9' de la seconde chambre 4'), chacun de ces volumes étant pourvu d'au moins une ouverture vers l'extérieur.

La présence de deux organes d'obturation 12 et 12' permet, lors du déplacement du tiroir 2, de réaliser une séquence prédéterminée de libération et de fermeture des ouvertures de sortie 8 et 8', éventuellement en partie progressive, ce en fonction de la forme et de la disposition des organes d'obturation 12 et 12' et des ouvertures 6 et 11. On obtient ainsi un dispositif de vanne 1 dit "à trois voies".

De plus, l'obturation sélective des ouvertures internes 6 et 11 du corps de vanne 3 dans des positions extrêmes opposées du tiroir coulissant 2, par plaquage du premier organe d'obturation 12 sur lesdites ouvertures dans la direction du coulissement du tiroir 2, permet d'aboutir à une qualité de fermeture desdites ouvertures qui est supérieure à celle résultant d'une obturation par translation latérale (telle que résultant notamment des deux documents FR précités).

En particulier, l'écrasement ou la compression d'un joint 14 ou 14' correspondant dans des positions d'obturation des ouvertures 6 et 11 permet d'aboutir à une étanchéité de très bonne qualité et avec des fuites résiduelles faibles (par exemple de l'ordre de 1 litre/heure, voire moins).

En accord avec une variante de réalisation structurelle préférée du dispositif de vanne 1, la seconde ouverture latérale de sortie de fluide 5' de la première chambre 4, l'ouverture de communication 6 entre les première et seconde chambres 4 et 4' et l'ouverture ou le passage de communication interne 11 entre les deux régions volumiques 9 et 9' de la seconde chambre 4' sont arrangées de manière alignée suivant la direction axiale X correspondant à l'axe de translation du tiroir 2, l'arbre ou la tige de commande 10' reliant ce dernier à l'actionneur 10, rotatif ou translatif, étant également arrangé(e) selon cet axe X et s'étendant dans le corps de vanne 3, avec réalisation d'une étanchéité radiale, à travers une ouverture 13 débouchant dans la seconde région volumique 9' de la seconde chambre 4'.

Afin d'aboutir à une fabrication simple et à une structure robuste, le tiroir coulissant 2 est une pièce d'un seul tenant, intégrant les premier et second organes d'obturation 12 et 12' et guidé dans la première et la seconde chambre 4 et 4'.

En outre, et de manière avantageuse, l'organe d'obturation 7 associé à et contrôlant la seconde ouverture 5' de sortie de fluide de la première chambre 4 est un organe d'obturation thermostatique, dont la composante thermosensible est située dans ladite chambre 4.

Le dispositif d'obturation thermostatique 7 peut, par exemple, comprendre un clapet 22 apte, par exemple par coopération de forme et compression d'un joint, à assurer une étanchéité de très bonne qualité en position d'obturation ou de fermeture (par exemple avec des fuites inférieures ou égales à 1 litre/heure). Ce clapet 22 est sollicité élastiquement en position de fermeture de l'ouverture de sortie 5' par un ressort 22' ou analogue prenant appui dans le corps de vanne 3 et forcé à l'ouverture par l'organe thermosensible du type actionneur physique ou chimique réagissant à la température, par exemple une cartouche de cire logée dans un corps 7' baigné par le fluide, ce par l'intermédiaire d'un axe de manoeuvre 22".

Un tel dispositif d'obturation 7 peut ainsi constituer un organe de sécurité positive, en plus de sa fonction de régulation du flux en fonction de la température.

Comme le montrent les figures des dessins annexés et selon un mode de réalisation pratique avantageux de l'invention, le premier organe d'obturation 12 présente une structure en plaque et est apte à venir sélectivement en appui sous pression sur les bords de l'ouverture de communication 6 entre les deux chambres 4 et 4' et de l'ouverture de communication interne 11 entre les deux régions 9 et 9' de la seconde chambre 4', l'obturation étanche de ces ouvertures 6 et 11 étant obtenue par compression d'un joint 14, 14' correspondant, ces joints 14, 14' étant montés ou formés par surmoulage au niveau des faces opposées dudit premier organe 12 ou autour des ouvertures 6, 11 précitées.

Pour autoriser le passage du fluide lorsqu'il n'est pas en position d'obturation, tout en étant guidé dans la première région 9 de la seconde chambre 4', le premier organe d'obturation 12 peut présenter des pattes latérales en contact avec la paroi interne de la chambre ou comporter des découpes (notamment lorsque le guidage est réalisé sur la totalité de la périphérie de l'organe).

Conformément à une autre caractéristique de l'invention, le second organe d'obturation 12' coulisse dans la seconde région 9' de la seconde chambre 4' en étant guidé et en réalisant une étanchéité radiale périphérique, au moins partielle ou limitée, entre le bord périphérique extérieur dudit second organe 12' et la face intérieure 15 de la paroi du corps de vanne 3 délimitant ladite seconde région 9', et la seconde ouverture latérale de sortie de fluide 8' débouche dans ladite seconde région 9' dans une position décalée axialement par rapport à l'ouverture interne de communication fluidique 11, de manière à permettre de définir une plage de positions en translation du second organe d'obturation 12' dans la seconde région 9' dans lesquelles il empêche une communication fluidique entre la première région 9 de la seconde chambre 4' et la seconde ouverture latérale de sortie 8'.

Ce deuxième organe d'obturation 12' peut, par exemple, prendre la forme d'un manchon cylindrique dont la surface extérieure coopère par contact glissant avec la face intérieure 15, en réalisant ainsi les fonctions de guidage et d'étanchéité.

De manière préférée, la face intérieure 15 est constituée par la face intérieure, éventuellement retravaillée ou revêtue d'un matériau adapté, de la paroi de la partie 3" formant la seconde chambre 4' du corps de vanne 3, le second organe d'obturation 12' étant pourvu sur son bord périphérique extérieur d'un segment racleur ou analogue en contact glissant avec ladite face intérieure 15, de manière à aboutir à une étanchéité au moins partielle ou limitée à ce niveau.

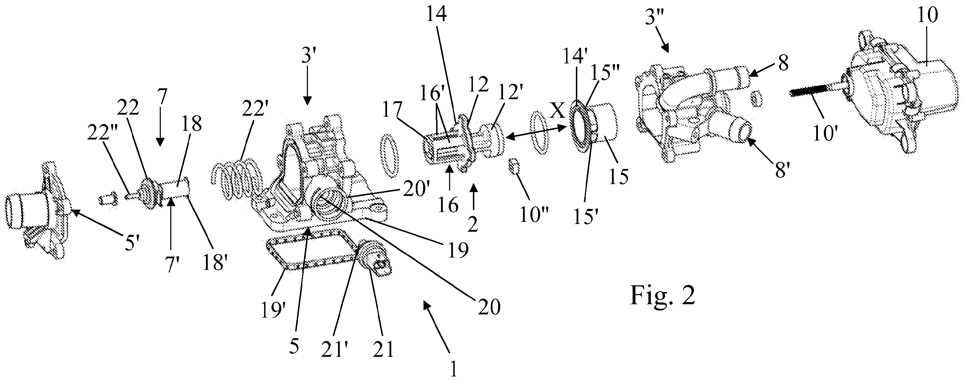

En variante, cette face intérieure 15 peut également être formée par un manchon, préférentiellement métallique, formant chemise, pourvu d'au moins un(e) jour ou découpe 15' positionné(e) en regard de la seconde ouverture latérale de sortie 8' et intégrant, le cas échéant, au niveau de son ouverture définissant l'ouverture de communication interne 11, un rebord annulaire 15" pourvu éventuellement d'une rainure circonférentielle pour la réception d'un joint de compression 14', par exemple torique, le second organe d'obturation 12' étant guidé dans ladite chemise 15 avec un jeu réduit (voir par exemple les figures 2, 3A, 4 et 5).

En vue de permettre au dispositif de vanne 1 de réaliser une fonction supplémentaire de contrôle de la circulation du fluide, affectant la distribution de ce dernier entre les trois sorties, il peut être prévu que le tiroir coulissant 2 comporte un troisième organe d'obturation 16, 17 situé dans la première chambre 4 et décalé axialement par rapport aux premier et second organes d'obturation 12 et 12' de telle manière qu'il occupe une position d'obturation au moins partielle de l'ouverture de communication 6 entre les première et seconde chambres 4 et 4' lorsque le premier organe d'obturation 12 ferme l'ouverture de communication interne 11 entre les deux régions volumique 9 et 9' de la seconde chambre 4', ledit troisième organe d'obturation 16, 17 coopérant éventuellement avec le dispositif d'obturation thermostatique 7 à des fins de guidage et/ou d'obturation de l'ouverture 6.

Il est ainsi possible de limiter le flux de fluide passant de la première chambre 4 dans la seconde chambre 4' lorsque l'ouverture de communication interne 11 est fermée par le premier organe d'obturation.

Le flux à travers la première ouverture de sortie 5 est alors maximalisé en étant régulé par l'organe d'obturation thermostatique 7 intégrant une régulation thermique directe.

En accord avec une réalisation pratique du moyen d'obturation supplémentaire précité, le dispositif d'obturation thermostatique 7 monté dans la première chambre 4 comprend un corps cylindrique 7' s'étendant dans ladite première chambre 4 en direction de l'ouverture de communication 6 entre la première et la seconde chambre 4, 4', en étant aligné avec l'axe de translation X, et le tiroir coulissant 2 comporte une formation saillante 16 s'étendant, de manière non obturante, à travers l'ouverture de communication 6 précitée et présentant une extrémité 17 à structure sensiblement annulaire, pouvant coulisser autour et le long du corps cylindrique 7', au moins sur une partie de sa course de coulissement, et positionné, en position d'obturation de l'ouverture de communication fluidique interne 11 par le tiroir coulissant 2, au niveau de ou dans l'ouverture de communication fluidique 6 entre la première et la seconde chambre 4, 4' en réalisant ainsi une obturation au moins partielle de cette dernière.

Cette possibilité d'interférence et de coopération entre le corps 7' du dispositif d'obturation 7 et la formation saillante 16 permet de réduire la dimension de la première chambre 4 dans la direction X, et donc l'encombrement du corps de vanne 3.

Selon une première variante de réalisation, la formation saillante 16 est avantageusement constituée d'au moins deux, préférentiellement quatre, pattes 16' parallèles et espacées rapportées ou formées sur le tiroir coulissant 2, préférentiellement d'un seul tenant avec le premier organe d'obturation 12 de ce dernier, et le corps cylindrique 7' du dispositif d'obturation thermostatique 7, ou un manchon cylindrique 18 rapporté entourant et/ou prolongeant ce dernier, s'étend jusque dans l'ouverture de communication 6 entre les deux chambres 4, 4', de telle manière qu'une obturation, sensiblement totale, étanche ou à fuite calibrée, est obtenue lorsque l'extrémité annulaire 17 de la formation saillante 16 est positionnée au niveau de ou dans ladite ouverture de communication 6 (non représenté).

En accord avec une seconde variante de réalisation et comme le montrent les figures 2, 4 et 5, la formation saillante 16 est constituée d'au moins deux, préférentiellement quatre, pattes 16' parallèles et espacées rapportées ou formées sur le tiroir coulissant 2, préférentiellement d'un seul tenant avec le premier organe d'obturation 12 de ce dernier, le corps cylindrique 7' du dispositif d'obturation thermostatique 7 étant pourvu d'un manchon cylindrique 18 télescopique dont l'extrémité peut venir en engagement, par exemple par l'intermédiaire de deux pattes radiales 18', avec la structure annulaire 17 en vue de son déploiement, préférentiellement sous contrainte élastique, en direction de l'ouverture de communication 6 entre les première et seconde chambres 4 et 4', cette ouverture 6 étant sensiblement obturée, de manière étanche ou avec une fuite calibrée, lorsque ladite structure annulaire 17 est positionnée au niveau de ou dans ladite ouverture 6.

Préférentiellement, les première et seconde régions volumiques 9 et 9' de la seconde chambre 4' présentent des formes cylindriques circulaires, de symétrie autour de la direction axiale X. Toutefois, d'autres formes de section peuvent également être envisagées.

Afin de faciliter le raccordement des conduits formant les portions de circuits de circulation extérieure, les trois ouvertures de sortie de fluide 5', 8 et 8' du corps de vanne 3 sont prolongées extérieurement par des embouts de connexion respectifs, formés d'un seul tenant avec ledit corps de vanne 3.

En vue de permettre une fixation étanche et résistante du dispositif de vanne 1 sur un bloc moteur, la première ouverture d'entrée 5 de la première chambre 4 est entourée, sur la face extérieure du corps de vanne 3, d'une platine de fixation 19 intégrant un joint d'étanchéité 19' rapporté ou surmoulé.

Afin de pouvoir fournir un signal de mesure précis de la température du fluide à des fins d'affichage, de commande et/ou de contrôle, la première chambre 4 comporte une ouverture latérale supplémentaire 20 prolongée extérieurement par un site 20' de réception étanche d'un capteur de température 21, dont l'extrémité sensible 21' est saillante dans ladite chambre 4 après montage dudit capteur 21.

Pour pouvoir fournir un ensemble structurel et fonctionnel intégrant tous les moyens nécessaires à la réalisation des différentes fonctions du dispositif de vanne 1, tout en conservant une constitution simple et peu encombrante, l'actionneur 10 est assemblé rigidement avec le corps de vanne 3 et consiste en un actionneur rotatif, éventuellement associé à un capteur de position, et comportant un axe de commande 10' sous la forme d'une tige filetée coopérant avec un écrou 10" monté de manière bloquée en rotation dans le tiroir coulissant 2, permettant de contrôler de manière précise le fonctionnement et le déplacement du tiroir 2.

Conformément à une variante de construction pratique avantageuse et comme représentée aux figures 1 à 3 et 5, le corps de vanne 3 est formé d'au moins deux parties constitutives 3', 3" en matériau thermoplastique ou thermodur, venues de moulage et assemblées de manière étanche par soudage (par vibration ou par laser par exemple), par vissage ou collage au niveau d'un plan d'assemblage, une première partie 3' définissant en majorité la première chambre 4 et une seconde partie 3" définissant la seconde chambre 4'.

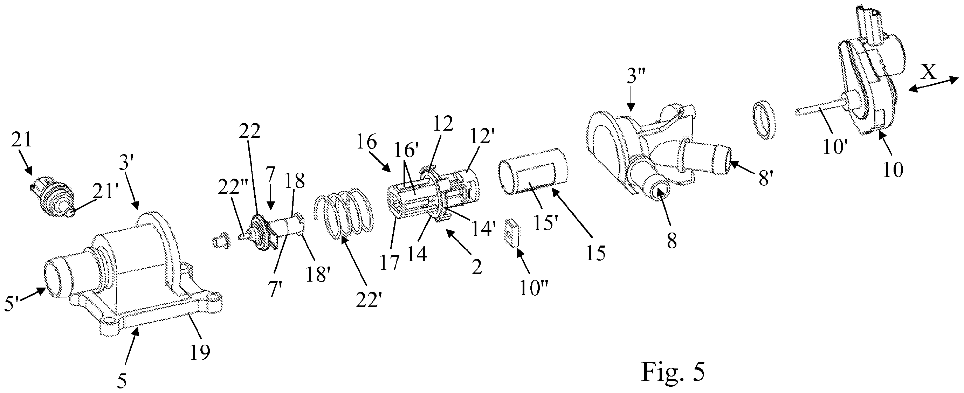

La figure 2 illustre une variante de construction du corps de vanne 3 en trois parties, alors que la figure 5 illustre une variante de construction en deux parties seulement.

Les joints de compression 14 et 14' sont avantageusement des joints toriques toujours montés par collage dans des rainures correspondantes entourant les ouvertures 6 et 11 et réalisés en caoutchouc modifié (par exemple du type EPDM ou en silicone).

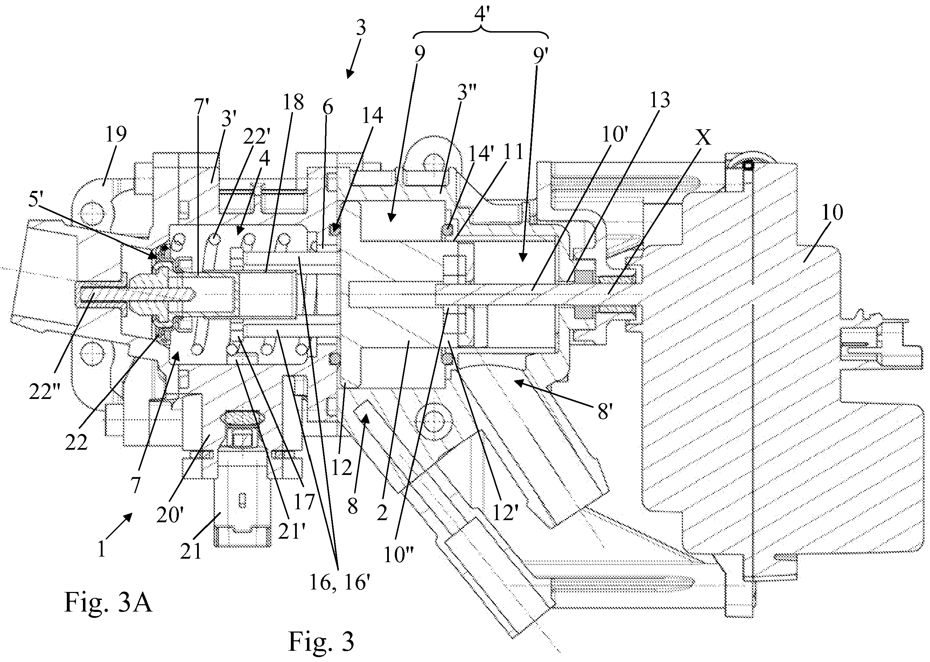

Les figures 3A à 3D illustrent des configurations différentes du dispositif de vanne 3 correspondant à des phases successives et séquentielles de régulation, dépendant de la position en translation du tiroir 2 et de la température du fluide circulant à travers la vanne.

Dans la figure 3A, aucun fluide ne circule à travers le dispositif de vanne 1, l'ensemble des ouvertures de sortie 5', 8 et 8' étant obturées, directement (fluide froid, dont l'ouverture 5 est obturée) ou indirectement (par l'obturation de l'ouverture de communication 6).

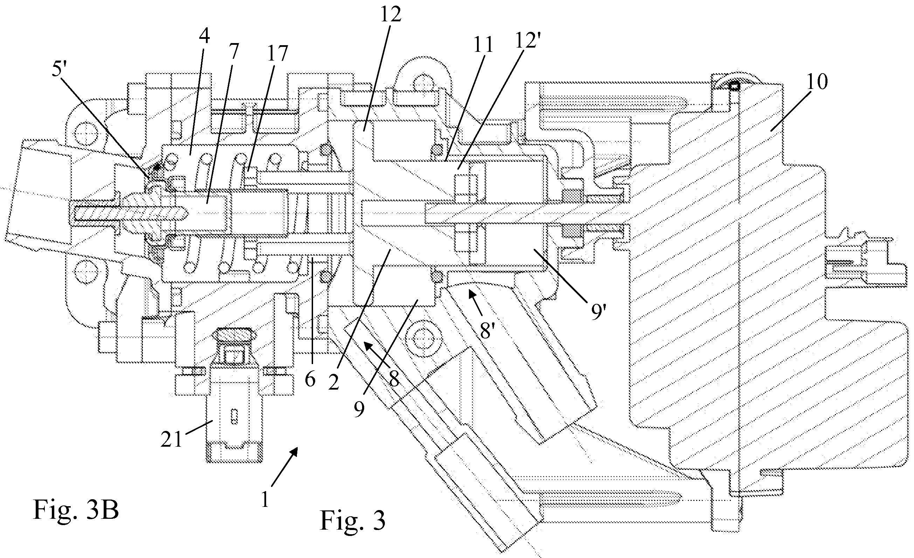

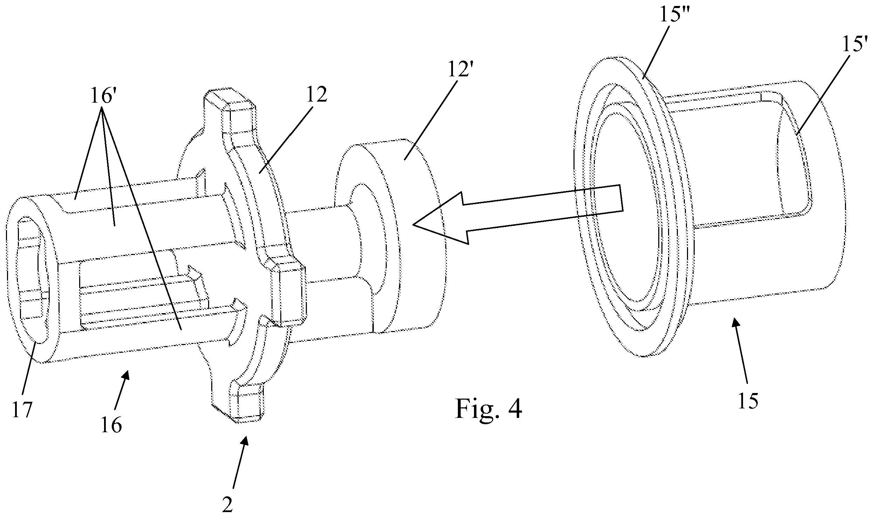

Dans la figure 3B, l'ouverture de communication 6 est libérée du fait du déplacement de l'organe d'obturation 12 et le fluide peut donc s'écouler à travers l'ouverture de sortie 8, l'ouverture de sortie 8' n'étant pas alimentée en fluide du fait de la position de l'organe d'obturation 12' dans la seconde région 9' (à voir en relation avec les figures 2 et 4).

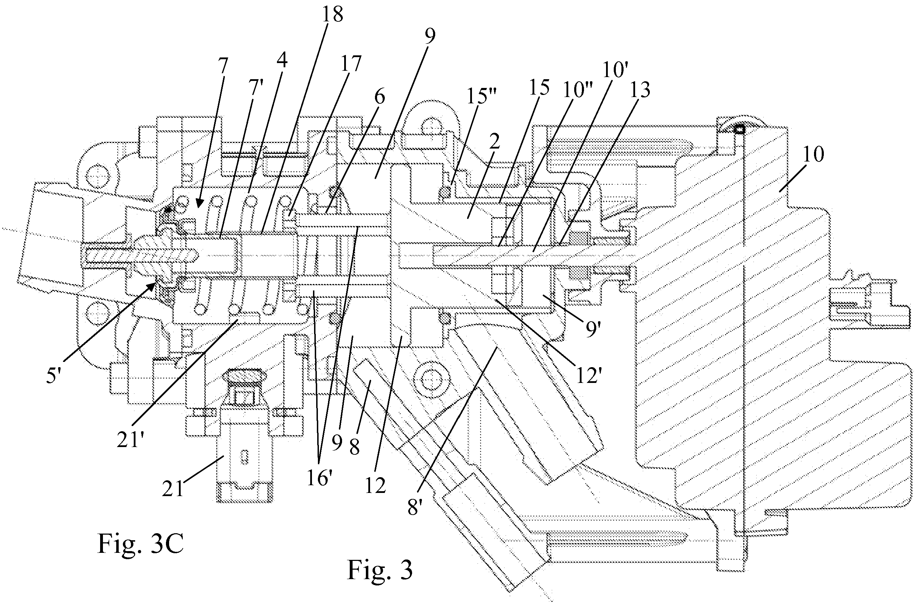

Dans la figure 3C, un déplacement supplémentaire du tiroir 2 (par rapport à sa position sur la figure 3B) a amené le second organe d'obturation 12' dans une position permettant de libérer au moins partiellement la seconde ouverture de sortie 8' et donc autorisant le passage de fluide à ce niveau, l'ouverture de sortie 8 demeurant par ailleurs dégagée.

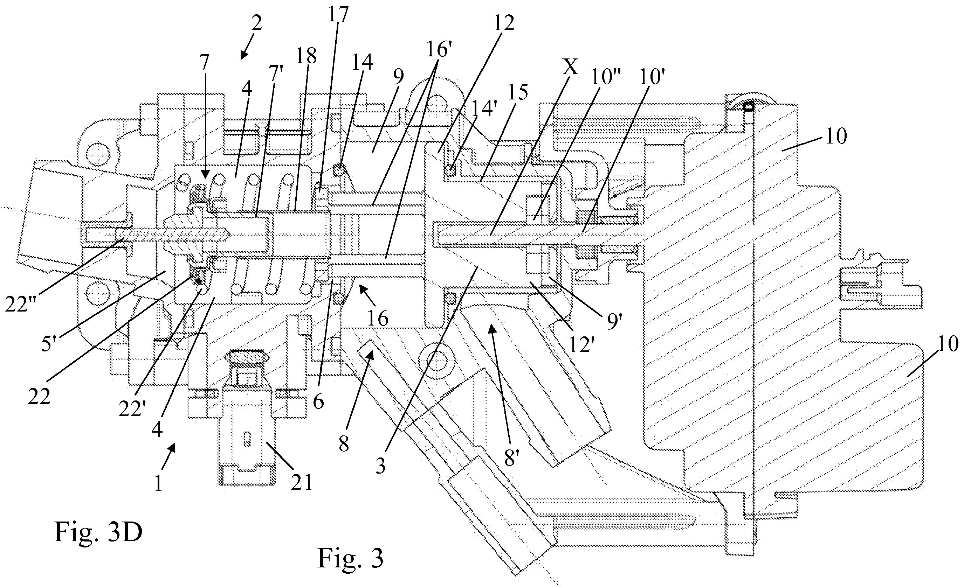

Dans la figure 3D, le tiroir 2 est déplacé dans sa position extrême opposée (par rapport à celle de la figure 3A) et le premier organe 12 obture de manière étanche l'ouverture interne 11 empêchant l'admission de fluide dans la seconde région 9' et dans l'ouverture de sortie 8'.

Simultanément, le troisième moyen d'obturation 17 du tiroir 2, ainsi que l'extrémité du manchon cylindrique 18, ont été amenés au niveau ou dans l'ouverture de communication 6 qui se retrouve ainsi sensiblement fermée, ou très fortement limitée en termes de passage de fluide vers la seconde chambre 4'.

La figure 3D illustre également le dégagement de l'ouverture de sortie 5' de la première chambre 4 lorsque la température du fluide dépasse une valeur seuil déterminée.

Les différentes phases de régulation illustrées sur les figures 3A à 3D peuvent, par exemple, correspondre aux différentes configurations recherchées pour un circuit de refroidissement d'un moteur à combustion interne, en fonction de ses phases de fonctionnement (démarrage à froid, phase intermédiaire de fonctionnement avec montée en température et phase de fonctionnement courant).

L'invention a également pour objet un circuit de circulation de fluide de refroidissement d'un moteur à combustion interne d'un véhicule automobile, caractérisé en ce qu'il comprend un dispositif de vanne 1 tel que décrit ci-dessus, dans lequel la première ouverture d'entrée de fluide 5 de la première chambre 4 est reliée à la sortie d'eau du bloc-culasses dudit moteur, la seconde ouverture de sortie de fluide 5' de la première chambre 4 est reliée au circuit alimentant le radiateur du véhicule, la première ouverture latérale de sortie de fluide 8 de la seconde chambre 4' est reliée à un premier circuit refroidisseur, par exemple au circuit alimentant l'aérotherme du véhicule, et la seconde ouverture latérale de sortie de fluide 8' de la seconde chambre 4' est reliée à un second circuit refroidisseur ou de dérivation, alimentant éventuellement au moins un échangeur de chaleur.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention.

## Revendications

1. Dispositif de vanne **(1)** à tiroir **(2)** coulissant selon une direction axiale **(X)** donnée, ledit dispositif de vanne **(1)** comprenant un corps de vanne **(3)** avec deux chambres **(4, 4')** mutuellement communicantes et contiguës dans la direction axiale **(X),** la première chambre **(4)** comportant une première ouverture latérale **(5)** d'entrée de fluide et une seconde ouverture **(5')** de sortie de fluide, située sensiblement à l'opposée de l'ouverture **(11)** de communication avec la seconde chambre **(5')** et pourvue d'un dispositif d'obturation **(7)** normalement fermé et à ouverture conditionnelle, la seconde chambre **(4')** comportant une première **(8)** et une seconde **(8')** ouvertures latérales de sortie de fluide mutuellement décalées dans la direction axiale **(X)** et débouchant respectivement dans des première **(9)** et seconde **(9')** régions ou zones volumiques intérieures distinctes de ladite seconde chambre **(4')** et le tiroir coulissant **(2)** étant guidé en translation dans ladite seconde chambre **(4')** et mobile sous l'effet d'un actionneur **(10)** à commande contrôlée,
**ledit** dispositif de vanne (1) **étant caractérisé en ce que** les première et deuxième régions intérieures (9 et 9') de ladite seconde chambre (4') sont arrangées de manière contiguë dans la direction axiale (X) et communiquent entre elles par l'intermédiaire d'une ouverture ou d'un passage interne (11), et **en ce que** le tiroir coulissant (2) comprend, d'une part, un premier organe d'obturation (12) apte à obturer sélectivement, dans deux positions de coulissement extrêmes opposées du tiroir (2) et par compression d'un joint (14, 14') correspondant respectif, l'ouverture de communication (6) entre les première et seconde chambres (4 et 4') ou l'ouverture ou le passage de communication interne (11) entre les première et deuxième régions intérieures (9 et 9') de la seconde chambre (4'), et, d'autre part, un second organe d'obturation (12') apte à empêcher la communication fluidique entre la seconde ouverture latérale de sortie de fluide (8') de la seconde chambre (4') et la première région intérieure (9) de ladite seconde chambre (4'), ce dans une
plage déterminée de translation du tiroir coulissant (2) depuis sa position extrême d'obturation de l'ouverture de communication (6) entre les première et deuxième chambres (4 et 4').

2. Dispositif de vanne selon la revendication 1, **caractérisé en ce que** la seconde ouverture latérale de sortie de fluide (5') de la première chambre (4), l'ouverture de communication (6) entre les première et seconde chambres (4 et 4') et l'ouverture ou le passage de communication interne (11) entre les deux régions volumiques (9 et 9') de la seconde chambre (4') sont arrangées de manière alignée suivant la direction axiale (X) correspondant à l'axe de translation du tiroir (2), l'arbre ou la tige de commande (10') reliant ce dernier à l'actionneur (10), rotatif ou translatif, étant également arrangé(e) selon cet axe (X) et s'étendant dans le corps de vanne (3), avec réalisation d'une étanchéité radiale, à travers une ouverture (13) débouchant dans la seconde région volumique (9') de la seconde chambre (4').

3. Dispositif de vanne selon l'une quelconque des revendications 1 et 2, **caractérisé en ce que** le tiroir coulissant (2) est une pièce d'un seul tenant, intégrant les premier et second organes d'obturation (12 et 12') et guidé dans la première et la seconde chambre (4 et 4') et **en ce que** l'organe d'obturation (7) associé à et contrôlant la seconde ouverture (5') de sortie de fluide de la première chambre (4) est un organe d'obturation thermostatique, dont la composante thermosensible est située dans ladite chambre (4).

4. Dispositif de vanne selon l'une quelconque des revendications 1 à 3, **caractérisé en ce que** le premier organe d'obturation (12) présente une structure en plaque et est apte à venir sélectivement en appui sous pression sur les bords de l'ouverture de communication (6) entre les deux chambres (4 et 4') et de l'ouverture de communication interne (11) entre les deux régions (9 et 9') de la seconde chambre (4'), l'obturation étanche de ces ouvertures (6 et 11) étant obtenue par compression d'un joint (14, 14') correspondant, ces joints (14, 14') étant montés ou formés par surmoulage au niveau des faces opposées dudit premier organe (12) ou autour des ouvertures (6, 11) précitées.

5. Dispositif de vanne selon l'une quelconque des revendications 1 à 4, **caractérisé en ce que** le second organe d'obturation (12') coulisse dans la seconde région (9') de la seconde chambre (4') en étant guidé et en réalisant une étanchéité radiale périphérique, au moins partielle ou limitée, entre le bord périphérique extérieur dudit second organe (12') et la face intérieure (15) de la paroi du corps de vanne (3) délimitant ladite seconde région (9'), et **en ce que** la seconde ouverture latérale de sortie de fluide (8') débouche dans ladite seconde région (9') dans une position décalée axialement par rapport à l'ouverture interne de communication fluidique (11), de manière à permettre de définir une plage de positions en translation du second organe d'obturation (12') dans la seconde région (9') dans lesquelles il empêche une communication fluidique entre la première région (9) de la seconde chambre (4') et la seconde ouverture latérale de sortie (8').

6. Dispositif de vanne selon l'une quelconque des revendications 1 à 5, **caractérisé en ce que** la face intérieure (15) est constituée par la face intérieure, éventuellement retravaillée ou revêtue d'un matériau adapté, de la paroi de la partie (3") formant la seconde chambre (4') du corps de vanne (3), le second organe d'obturation (12') étant pourvu sur son bord périphérique extérieur d'un segment racleur ou analogue en contact glissant avec ladite face intérieure (15).

7. Dispositif de vanne selon l'une quelconque des revendications 1 à 5, **caractérisé en ce que** la face intérieure (15) de la paroi délimitant la seconde région (9') de la seconde chambre (4') est formée par un manchon, préférentiellement métallique, formant chemise, pourvu d'au moins un(e) jour ou découpe (15') positionné(e) en regard de la seconde ouverture latérale de sortie (8') et intégrant, le cas échéant, au niveau de son ouverture définissant l'ouverture de communication interne (11), un rebord annulaire (15") pourvu éventuellement d'une rainure circonférentielle pour la réception d'un joint de compression (14'), par exemple torique, le second organe d'obturation (12') étant guidé dans ladite chemise (15) avec un jeu réduit.

8. Dispositif de vanne selon l'une quelconque des revendications 1 à 7, **caractérisé en ce que** le tiroir coulissant (2) comporte un troisième organe d'obturation (16, 17) situé dans la première chambre (4) et décalé axialement par rapport aux premier et second organes d'obturation (12 et 12') de telle manière qu'il occupe une position d'obturation au moins partielle de l'ouverture de communication (6) entre les première et seconde chambres (4 et 4') lorsque le premier organe d'obturation (12) ferme l'ouverture de communication interne (11) entre les deux régions volumique (9 et 9') de la seconde chambre (4'), ledit troisième organe d'obturation (16, 17) coopérant éventuellement avec le dispositif d'obturation thermostatique (7) à des fins de guidage et/ou d'obturation de l'ouverture (6).

9. Dispositif de vanne selon l'une quelconque des revendications 1 à 8, **caractérisé en ce que** le dispositif d'obturation thermostatique (7) monté dans la première chambre (4) comprend un corps cylindrique (7') s'étendant dans ladite première chambre (4) en direction de l'ouverture de communication (6) entre la première et la seconde chambre (4, 4'), en étant aligné avec l'axe de translation (X), et **en ce que** le tiroir coulissant (2) comporte une formation saillante (16) s'étendant, de manière non obturante, à travers l'ouverture de communication (6) précitée et présentant une extrémité (17) à structure sensiblement annulaire, pouvant coulisser autour et le long du corps cylindrique (7'), au moins sur une partie de sa course de coulissement, et positionné, en position d'obturation de l'ouverture de communication fluidique interne (11) par le tiroir coulissant (2), au niveau de ou dans l'ouverture de communication fluidique (6) entre la première et la seconde chambre (4, 4') en réalisant ainsi une obturation au moins partielle de cette dernière.

10. Dispositif de vanne selon la revendication 9, **caractérisé en ce que** la formation saillante (16) est constituée d'au moins deux, préférentiellement quatre, pattes (16') parallèles et espacées rapportées ou formées sur le tiroir coulissant (2), préférentiellement d'un seul tenant avec le premier organe d'obturation (12) de ce dernier, et **en ce que** le corps cylindrique (7') du dispositif d'obturation thermostatique (7), ou un manchon cylindrique (18) rapporté entourant et/ou prolongeant ce dernier, s'étend jusque dans l'ouverture de communication (6) entre les deux chambres (4, 4'), de telle manière qu'une obturation, sensiblement totale, étanche ou à fuite calibrée, est obtenue lorsque l'extrémité annulaire (17) de la formation saillante (16) est positionnée au niveau de ou dans ladite ouverture de communication (6).

11. Dispositif de vanne selon la revendication 9, **caractérisé en ce que** la formation saillante (16) est constituée d'au moins deux, préférentiellement quatre, pattes (16') parallèles et espacées rapportées ou formées sur le tiroir coulissant (2), préférentiellement d'un seul tenant avec le premier organe d'obturation (12) de ce dernier, le corps cylindrique (7') du dispositif d'obturation thermostatique (7) étant pourvu d'un manchon cylindrique (18) télescopique dont l'extrémité peut venir en engagement, par exemple par l'intermédiaire de deux pattes radiales (18'), avec la structure annulaire (17) en vue de son déploiement, préférentiellement sous contrainte élastique, en direction de l'ouverture de communication (6) entre les première et seconde chambres (4 et 4'), cette ouverture (6) étant sensiblement obturée, de manière étanche ou avec une fuite tolérée ou calibrée, lorsque ladite structure annulaire (17) est positionnée au niveau de ou dans ladite ouverture (6).

12. Dispositif de vanne selon l'une quelconque des revendications 1 à 11, **caractérisé en ce que** les première et seconde régions volumiques (9 et 9') de la seconde chambre (4') présentent des formes cylindriques circulaires, de symétrie autour de la direction axiale (X).

13. Dispositif de vanne selon l'une quelconque des revendications 1 à 12, **caractérisé en ce que** les trois ouvertures de sortie de fluide (5', 8 et 8') du corps de vanne (3) sont prolongées extérieurement par des embouts de connexion respectifs, formés d'un seul tenant avec ledit corps de vanne (3).

14. Dispositif de vanne selon l'une quelconque des revendications 1 à 13, **caractérisé en ce que** la première ouverture d'entrée (5) de la première chambre (4) est entourée, sur la face extérieure du corps de vanne (3), d'une platine de fixation (19) intégrant un joint d'étanchéité (19') rapporté ou surmoulé et **en ce que** la première chambre (4) comporte une ouverture latérale supplémentaire (20) prolongée extérieurement par un site (20') de réception étanche d'un capteur de température (21), dont l'extrémité sensible (21') est saillante dans ladite chambre (4) après montage dudit capteur (21).

15. Dispositif de vanne selon l'une quelconque des revendications 1 à 14, **caractérisé en ce que** l'actionneur (10) est assemblé rigidement avec le corps de vanne (3) et consiste en un actionneur rotatif, éventuellement associé à un capteur de position, et comportant un axe de commande (10') sous la forme d'une tige filetée coopérant avec un écrou (10") monté de manière bloquée en rotation dans le tiroir coulissant (2).

16. Dispositif de vanne selon l'une quelconque des revendications 1 à 15, **caractérisé en ce que** le corps de vanne (3) est formé d'au moins deux parties constitutives (3', 3") en matériau thermoplastique ou thermodur, venues de moulage et assemblées de manière étanche par soudage, vissage ou collage au niveau d'un plan d'assemblage, une première partie (3') définissant en majorité la première chambre (4) et une seconde partie (3") définissant la seconde chambre (4').

17. Circuit de circulation de fluide de refroidissement d'un moteur à combustion interne d'un véhicule automobile, **caractérisé en ce qu'**il comprend un dispositif de vanne (1) selon l'une quelconque des revendications 1 à 16, dans lequel la première ouverture d'entrée de fluide (5) de la première chambre (4) est reliée à la sortie d'eau du bloc-culasses dudit moteur, la seconde ouverture de sortie de fluide (5') de la première chambre (4) est reliée au circuit alimentant le radiateur du véhicule, la première ouverture latérale de sortie de fluide (8) de la seconde chambre (4') est reliée à un premier circuit refroidisseur, par exemple au circuit alimentant l'aérotherme du véhicule et la seconde ouverture latérale de sortie de fluide (8') de la seconde chambre (4') est reliée à un second circuit refroidisseur ou de dérivation, alimentant éventuellement au moins un échangeur de chaleur.

## Patentansprüche

1. Ventileinrichtung (1) mit Schieber (2), der entlang einer gegebenen axialen Richtung (X) gleitet, wobei die Ventileinrichtung (1) einen Ventilkörper (3) mit zwei Kammern (4, 4') umfasst, die miteinander kommunizieren und in die axiale Richtung (X) nebeneinander liegen, wobei die erste Kammer (4) eine erste seitliche Eingangsöffnung (5) für Fluid und eine zweite Ausgangsöffnung (5') für Fluid umfasst, die im Wesentlichen der Öffnung (11) zur Kommunikation mit der zweiten Kammer (5') entgegengesetzt liegt und mit einer Verschlussvorrichtung (7) versehen ist, die normalerweise geschlossen ist und sich bedingt öffnet, wobei die zweite Kammer (4') eine erste und (8) und eine zweite (8') seitliche Öffnung zum Austreten von Fluid umfasst, die voneinander in die axiale Richtung (X) versetzt sind und jeweils in einen ersten (9) und einen zweiten (9') Bereich oder Innenvolumenzonen, der/die von der zweiten Kammer (4') getrennt ist, münden, und wobei der gleitende Schieber (2) in Verschiebung in der zweiten Kammer (4') und unter der Einwirkung eines Aktuators (10) mit kontrolliertem Steuern geführt ist,
wobei die Ventileinrichtung **dadurch gekennzeichnet ist, dass** der erste und der zweite Innenbereich (9 und 9') der zweiten Kammer (4') nebeneinander in die axiale Richtung (X) eingerichtet sind und miteinander durch eine Öffnung oder eine Innenpassage (11) kommunizieren, und dass der gleitende Schieber (2) einerseits ein erstes Verschlussorgan (12) umfasst, das geeignet ist, um selektiv in zwei Endgleitpositionen, die dem Schieber (2) entgegengesetzt sind und durch Komprimieren einer jeweiligen entsprechenden Dichtung (14, 14'), die Kommunikationsöffnung (6) zwischen der ersten und zweiten Kammer (4 und 4') oder die Öffnung der internen Kommunikationspassage (11) zwischen dem ersten und zweiten Innenbereich (9 und 9') der zweiten Kammer (4') zu verschließen, und andererseits ein zweites Verschlussorgan (12'), das geeignet ist, die Fluidkommunikation zwischen der zweiten seitlichen Ausgangsöffnung (8') für Fluid der zweiten Kammer (4') und dem ersten Innenbereich (9) der zweiten Kammer (4') zu verhindern, und zwar in einem bestimmten Verschiebungsbereich des gleitenden Schiebers (2) von seiner Endposition zum Verschließen der Kommunikationsöffnung (6) zwischen der ersten und zweiten Kammer (4 und 4').

2. Ventileinrichtung nach Anspruch 1, **dadurch gekennzeichnet, dass** die zweite seitliche Fluidausgangsöffnung (5') der ersten Kammer (4), die Kommunikationsöffnung (6) zwischen der ersten und zweiten Kammer (4 und 4') und die Öffnung oder interne Kommunikationspassage (11) zwischen den zwei Volumenbereichen (9 und 9') der zweiten Kammer (4') entlang der axialen Richtung (X), die der Verschiebungsachse des Schiebers (2) entspricht, gefluchtet eingerichtet sind, wobei die Welle oder der Steuerschaft (10'), die/der den Letzteren mit dem Aktuator (10), der drehend oder verschiebend ist, verbindet, ebenfalls entlang dieser Achse (X) eingerichtet ist und sich in den Ventilkörper (3) durch eine Öffnung (13), die in den zweiten Volumenbereich (9') der zweiten Kammer (4') mündet, erstreckt, wobei eine radiale Abdichtung hergestellt wird.

3. Ventileinrichtung nach einem der Ansprüche 1 und 2, **dadurch gekennzeichnet**, das der gleitende Schieber (2) ein Teil aus einem einzigen Stück ist, das das erste und das zweite Verschlussorgan (12 und 12') integriert und in der ersten und zweiten Kammer (4 und 4') geführt ist, und dass das Verschlussorgan (7), das zu der zweiten Fluidausgangsöffnung (5') der ersten Kammer (4) gehört und diese steuert, ein thermostatisches Verschlussorgan ist, dessen wärmeempfindliche Komponente in der Kammer (4) liegt.

4. Ventileinrichtung nach einem der Ansprüche 1 bis 3, **dadurch gekennzeichnet, dass** das erste Verschlussorgan (12) eine Plattenstruktur aufweist und geeignet ist, selektiv unter Druck auf den Rändern der Kommunikationsöffnung (6) zwischen den zwei Kammern (4 und 4') und der internen Kommunikationsöffnung (11) zwischen den zwei Bereichen (9 und 9') der zweiten Kammer (4') zum Aufliegen zu kommen, wobei das dichte Verschließen dieser Öffnungen (6 und 11) durch Komprimieren einer entsprechenden Dichtung (14, 14') erhalten wird, wobei diese Dichtungen (14, 14') durch Überformen im Bereich der entgegengesetzten Seiten des ersten Organs (12) oder um Öffnungen (6, 11), die oben erwähnt sind, montiert oder gebildet sind.

5. Ventileinrichtung nach einem der Ansprüche 1 bis 4, **dadurch gekennzeichnet, dass** das zweite Verschlussorgan (12') in dem zweiten Bereich (9') der zweiten Kammer (4') gleitet, wobei es geführt wird und eine radiale umfängliche Abdichtung, die mindestens teilweise oder begrenzt ist, zwischen dem umfänglichen Außenrand des zweiten Organs (12') und der Innenseite (15) der Wand des Ventilkörpers (3), die den zweiten Bereich (9') abgrenzt, herstellt, und dass die zweite seitliche Fluidausgangsöffnung (8') in dem zweiten Bereich (9') in einer Position mündet, die axial in Bezug auf die interne Fluidkommunikationsöffnung (11) derart versetzt ist, dass sie es erlaubt, einen Bereich von Verschiebungspositionen des zweiten Verschlussorgans (12') in die zweite Richtung (9') zu definieren, in die sie eine Fluidkommunikation zwischen dem ersten Bereich (9) der zweiten Kammer (4') und der zweiten seitlichen Ausgangsöffnung (8') verhindern.

6. Ventileinrichtung nach einem der Ansprüche 1 bis 5, **dadurch gekennzeichnet, dass** die Innenseite (15) aus der Innenseite, die eventuell nachbearbeitet oder mit einem passenden Werkstoff beschichtet ist, der Wand des Teils (3"), die die zweite Kammer (4') des Ventilkörpers (3) bildet, besteht, wobei das zweite Verschlussorgan (12') auf seinem Äußeren umfänglichen Rand mit einem Abstreifsegment oder Ähnlichem in gleitender Berührung mit der Innenseite (15) versehen ist.

7. Ventileinrichtung nach einem der Ansprüche 1 bis 5, **dadurch gekennzeichnet, dass** die Innenseite (15) der Wand, die den zweiten Bereich (9') der zweiten Kammer (4') abgrenzt, durch einen Stutzen, der vorzugsweise metallisch ist, gebildet ist, der einen Mantel bildet, der mit mindestens einer Öffnung oder einem Ausschnitt (15') versehen ist, die/der gegenüber der zweiten seitlichen Ausgangsöffnung (8') positioniert ist und gegebenenfalls im Bereich ihrer/seiner Öffnung, die die interne Kommunikationsöffnung (11) definiert, einen ringförmigen Rand (15") integriert, der eventuell mit einer umfänglichen Rille für die Aufnahme einer Kompressionsdichtung (14'), zum Beispiel einer O-Ring Dichtung, versehen ist, wobei das zweite Verschlussorgan (12') in dem Mantel (15) mit einem verringerten Spiel geführt wird.

8. Ventileinrichtung nach einem der Ansprüche 1 bis 7, **dadurch gekennzeichnet, dass** der gleitende Schieber (2) ein drittes Verschlussorgan (16, 17) umfasst, das in der ersten Kammer (4) liegt und axial in Bezug auf das erste und das zweite Verschlussorgan (12 und 12') derart versetzt ist, dass es eine mindestens teilweise Verschlussposition der Kommunikationsöffnung (6) zwischen der ersten und zweiten Kammer (4 und 4') belegt, wenn das erste Verschlussorgan (12) die interne Kommunikationsöffnung (11) zwischen den zwei Volumenbereichen (9 und 9') der zweiten Kammer (4') verschließt, wobei das dritte Verschlussorgan (16, 17) eventuell mit der thermostatischen Verschlussvorrichtung (7) zum Zweck des Führens und/oder Verschließens der Öffnung (6) zusammenwirkt.

9. Ventileinrichtung nach einem der Ansprüche 1 bis 8, **dadurch gekennzeichnet, dass** die thermostatische Verschlussvorrichtung (7), die in die erste Kammer (4) montiert ist, einen zylindrischen Körper (7') umfasst, der sich in die erste Kammer (4) in Richtung der Kommunikationsöffnung (6) zwischen der ersten und zweiten Kammer (4, 4') erstreckt und dabei mit der Verschiebungsachse (X) ausgerichtet ist, und dass der gleitende Schieber (2) eine vorstehende Ausbildung (16) umfasst, die sich nicht verschließend durch die oben zitierte Kommunikationsöffnung (6) erstreckt und ein Ende (17) mit im Wesentlichen ringförmiger Struktur aufweist, das um und entlang des zylindrischen Körpers (7') mindestens auf einem Teil seines Gleithubs gleiten kann und in Verschlussposition der internen Fluidkommunikationsöffnung (11) durch den gleitenden Schieber (2) im Bereich der Fluidkommunikationsöffnung (6) oder in ihr zwischen der ersten und der zweiten Kammer (4, 4') positioniert ist, indem daher ein wenigstens teilweiser Verschluss dieser Letzteren hergestellt wird.

10. Ventileinrichtung nach Anspruch 9, **dadurch gekennzeichnet, dass** die vorstehende Ausbildung (16) aus mindestens zwei, bevorzugt vier Pratzen (16') besteht, die parallel und beabstandet auf dem gleitenden Schieber (2) angebaut oder ausgebildet sind, vorzugsweise aus einem Stück mit dem ersten Verschlussorgan (12) dieses Letzteren, und dass der zylindrische Körper (7') der thermostatische Verschlussvorrichtung (7) oder ein zylindrischer Stutzen (18), der diesen Letzteren umgebend und/oder verlängernd an ihm angebaut ist, sich bis in die Kommunikationsöffnung (6) zwischen den zwei Kammern (4, 4') derart erstreckt, dass ein im Wesentlichen vollständiges, dichtes Verschließen oder Verschließen mit kalibriertem Leck erhalten wird, wenn das ringförmige Ende (17) der vorstehenden Ausbildung (16) im Bereich der Kommunikationsöffnung (6) oder in ihr positioniert ist.

11. Ventileinrichtung nach Anspruch 9, **dadurch gekennzeichnet, dass** die vorstehende Ausbildung (16) aus mindestens zwei, bevorzugt vier Pratzen (16') besteht, die parallel und beabstandet auf dem gleitenden Schieber (2) angebaut oder ausgebildet sind, vorzugsweise aus einem Stück mit dem ersten Verschlussorgan (12) dieses Letzteren, wobei der zylindrische Körper (7') der thermostatischen Verschlussvorrichtung (7) mit einem teleskopischen zylindrischen Stutzen (18) versehen ist, dessen Ende zum Beispiel über zwei radiale Pratzen (18') mit der ringförmigen Struktur (17) zu deren Ausbreiten, vorzugsweise unter elastischer Belastung in Richtung der Kommunikationsöffnung (6) zwischen der ersten und zweiten Kammer (4 und 4') zum Eingreifen kommen kann, wobei diese Öffnung (6) im Wesentlichen verschlossen ist, dicht oder mit zulässigem oder kalibriertem Leck, wenn die ringförmige Struktur (17) im Bereich oder in der Öffnung (6) positioniert ist.

12. Ventileinrichtung nach einem der Ansprüche 1 bis 11, **dadurch gekennzeichnet, dass** der erste und zweite Volumenbereich (9 und 9') der zweiten Kammer (4') kreisförmige zylindrische Formen mit Symmetrie um die axiale Richtung (X) aufweisen.

13. Ventileinrichtung nach einem der Ansprüche 1 bis 12, **dadurch gekennzeichnet, dass** die drei Fluidausgangsöffnungen (5', 8 und 8') des Ventilkörpers (3) außen durch jeweilige Anschlussansätze verlängert sind, die aus einem Stück mit dem Ventilkörper (3) ausgebildet sind.

14. Ventileinrichtung nach einem der Ansprüche 1 bis 13, **dadurch gekennzeichnet, dass** die erste Eingangsöffnung (5) der ersten Kammer (4) auf der Außenseite des Ventilkörpers (3) mit einer Befestigungsplatte (19) umgeben ist, die eine Dichtung (19') integriert, die angebaut oder überformt ist, und dass die erste Kammer (4) eine zusätzliche seitliche Öffnung (20) umfasst, die außen durch eine dichte Stelle (20') zum Aufnehmen eines Temperatursensors (21), dessen empfindliches Ende (21') in die Kammer (4) nach der Montage des Sensors (21) vorsteht, verlängert ist.

15. Ventileinrichtung nach einem der Ansprüche 1 bis 14, **dadurch gekennzeichnet, dass** der Aktuator (10) starr mit dem Ventilkörper (3) zusammengefügt ist und aus einem drehenden Aktuator besteht, der eventuell mit einem Positionssensor assoziiert ist, und eine Steuerachse (10') in der Form eines Gewindeschafts umfasst, der mit einer Mutter (10") zusammenwirkt, die in Drehung blockiert in den gleitenden Schieber (2) montiert ist.

16. Ventileinrichtung nach einem der Ansprüche 1 bis 15, **dadurch gekennzeichnet, dass** der Ventilkörper (3) aus mindestens zwei Bestandteilen (3', 3") aus Thermoplastwerkstoff oder Duroplast gebildet ist, die gemeinsam geformt und durch Schweißen, Schrauben oder Kleben im Bereich einer Zusammenfügeebene dicht zusammengefügt werden, wobei ein erster Teil (3') zum Großteil die erste Kammer (4) definiert, und ein zweiter Teil (3") die zweite Kammer (4') definiert.

17. Kühlfluid-Zirkulationskreislauf einer Brennkraftmaschine eines Kraftfahrzeugs, **dadurch gekennzeichnet, dass** er eine Ventileinrichtung (1) nach einem der Ansprüche 1 bis 16 umfasst, wobei die erste Fluideingangsöffnung (5) der ersten Kammer (4) mit dem Wasserausgang des Zylinderkopfblocks der Maschine verbunden ist, wobei die zweite Fluidausgangsöffnung (5') der ersten Kammer (4) mit dem Kreislauf verbunden ist, der den Kühler des Fahrzeugs versorgt, wobei die erste seitliche Fluidausgangsöffnung (8) der zweiten Kammer (4') mit einem ersten Kühlkreislauf verbunden ist, zum Beispiel mit dem Kühlkreislauf, der das Luftheizgerät des Fahrzeugs versorgt, und die zweite seitliche Fluidausgangsöffnung (8') der zweiten Kammer (4') mit einem zweiten Kühlkreislauf oder Abzweigungskreislauf verbunden ist, der eventuell mindestens einen Wärmeaustauscher versorgt.

## Claims

1. A valve device (1) with a slide (2) sliding in a given axial direction (X), said valve device (1) including a valve body (3) with two chambers (4, 4') that communicate with one another and are contiguous in the axial direction (X), the first chamber (4) comprising a first lateral opening (5) for the inlet of fluid and a second opening (5') for the outlet of fluid, situated substantially opposite the opening (11) communicating with the second chamber (5') and provided with a blocking device (7) that is normally closed and opens conditionally, the second chamber (4') comprising a first (8) and a second (8') lateral opening for the outlet of fluid that are mutually offset in the axial direction (X) and emerge respectively in first (9) and second (9') interior volumetric regions or zones that are separate from said second chamber (4'), and the sliding slide (2) being guided in translation in said second chamber (4') and movable under the effect of a controlled command actuator (10),
**said** valve device (1) **being characterized in that** the first and second interior regions (9 and 9') of said second chamber (4') are arranged in a contiguous manner in the axial direction (X) and communicate with one another by means of an opening or an internal passage (11), and **in that** the sliding slide (2) includes, on the one hand, a first blocking element (12) able to block selectively, in two opposite extreme sliding positions of the slide (2) and by compression of a respective corresponding joint (14, 14'), the communication opening (6) between the first and second chambers (4 and 4') or the opening or the internal communication passage (11) between the first and second interior regions (9 and 9') of the second chamber (4'), and, on the other hand, a second blocking element (12') able to prevent fluidic communication between the second lateral opening (8') for the outlet of fluid from the second chamber (4') and the first interior region (9) of said second chamber (4'), in a defined range of translation of the sliding slide (2) from its extreme position for blocking the communication opening (6) between the first and second chambers (4 and 4').

2. The valve device according to Claim 1, **characterized in that** the second lateral opening (5') for the outlet of fluid from the first chamber (4), the communication opening (6) between the first and second chambers (4 and 4') and the opening or the internal communication passage (11) between the two volumetric regions (9 and 9') of the second chamber (4') are arranged in an aligned manner in the axial direction (X) corresponding to the axis of translation of the slide (2), the shaft or the control rod (10') connecting the latter to the rotary or translational actuator (10) also being arranged along this axis (X) and extending in the valve body (3), realizing a radial seal, through an opening (13) emerging in the second volumetric region (9') of the second chamber (4').

3. The valve device according to any one of Claims 1 and 2, **characterized in that** the sliding slide (2) is a single piece, integrating the first and second blocking elements (12 and 12') and guided in the first and second chamber (4 and 4') and **in that** the blocking element (7) associated with and controlling the second opening (5') for the outlet of fluid from the first chamber (4) is a thermostatic blocking element, the heat-sensitive component of which is situated in said chamber (4).

4. The valve device according to any one of Claims 1 to 3, **characterized in that** the first blocking element (12) has a plate structure and is suitable for selectively abutting under pressure the edges of the communication opening (6) between the two chambers (4 and 4') and of the internal communication opening (11) between the two regions (9 and 9') of the second chamber (4'), the tight blocking of these openings (6 and 11) being obtained by compression of a corresponding joint (14, 14'), these joints (14, 14') being mounted or formed by overmoulding at the level of the opposite faces of said first element (12) or around the above-mentioned openings (6, 11).

5. The valve device according to any one of Claims 1 to 4, **characterized in that** the second blocking element (12') slides in the second region (9') of the second chamber (4') by being guided and by realizing a radial peripheral seal, at least partial or limited, between the exterior peripheral edge of said second element (12') and the interior face (15) of the wall of the valve body (3) delimiting said second region (9'), and **in that** the second lateral opening (8') for the outlet of fluid emerges in said second region (9') in an axially offset position relative to the internal fluidic communication opening (11), so as to make it possible to define a range of positions in translation of the second blocking element (12') in the second region (9') in which it prevents fluidic communication between the first region (9) of the second chamber (4') and the second lateral outlet opening (8').

6. The valve device according to any one of Claims 1 to 5, **characterized in that** the interior face (15) is constituted by the interior face, optionally reworked or coated with a suitable material, of the wall of the part (3") forming the second chamber (4') of the valve body (3), the second blocking element (12') being provided on its exterior peripheral edge with a scraper segment or similar in sliding contact with said interior face (15).

7. The valve device according to any one of Claims 1 to 5, **characterized in that** the interior face (15) of the wall delimiting the second region (9') of the second chamber (4') is formed by a preferably metallic sleeve, forming a jacket, provided with at least one opening or cutout (15') positioned opposite the second lateral outlet opening (8') and integrating, if necessary, at the level of its opening defining the internal communication opening (11), an annular flange (15") optionally provided with a circumferential groove for receiving a compression joint (14'), for example an O-ring, the second blocking element (12') being guided in said jacket (15) with a reduced play.

8. The valve device according to any one of Claims 1 to 7, **characterized in that** the sliding slide (2) comprises a third blocking element (16, 17) situated in the first chamber (4) and offset axially with respect to the first and second blocking elements (12 and 12') such that it occupies a position at least partially blocking the communication opening (6) between the first and second chambers (4 and 4') when the first blocking element (12) closes the internal communication opening (11) between the two volumetric regions (9 and 9') of the second chamber (4'), said third blocking element (16, 17) optionally cooperating with the thermostatic blocking device (7) for purposes of guiding and/or blocking the opening (6).

9. The valve device according to any one of Claims 1 to 8, **characterized in that** the thermostatic blocking device (7) mounted in the first chamber (4) comprises a cylindrical body (7') extending in said first chamber (4) in the direction of the communication opening (6) between the first and the second chamber (4, 4'), by being aligned with the translation axis (X), and **in that** the sliding slide (2) comprises a projecting formation (16) extending, in a non-blocking manner, through the above-mentioned communication opening (6) and having an end (17) of substantially annular structure, able to slide around and along the cylindrical body (7'), at least over a portion of its sliding path, and positioned, in the blocking position of the internal fluidic communication opening (11) by the sliding slide (2), at the level of or in the fluidic communication opening (6) between the first and the second chamber (4, 4') by thus realizing an at least partial blocking of the latter.

10. The valve device according to Claim 9, **characterized in that** the projecting formation (16) is constituted by at least two, preferably four, lugs (16'), parallel and spaced, added or formed on the sliding slide (2), preferably integral with the first blocking element (12) of the latter, and **in that** the cylindrical body (7') of the thermostatic blocking device (7), or an added cylindrical sleeve (18) surrounding and/or extending the latter, extends into the communication opening (6) between the two chambers (4, 4'), such that a blocking that is substantially total, tight or with a calibrated leak, is obtained when the annular end (17) of the projecting formation (16) is positioned at the level of or in said communication opening (6).

11. The valve device according to Claim 9, **characterized in that** the projecting formation (16) is constituted by at least two, preferably four, lugs (16'), parallel and spaced, added or formed on the sliding slide (2), preferably integral with the first blocking element (12) of the latter, the cylindrical body (7') of the thermostatic blocking device (7) being provided with a telescopic cylindrical sleeve (18), the end of which can come into engagement, for example by means of two radial lugs (18'), with the annular structure (17) for the purpose of its deployment, preferably under elastic stress, in the direction of the communication opening (6) between the first and second chambers (4 and 4'), this opening (6) being substantially blocked, in a tight manner or with a tolerated or calibrated leak, when said annular structure (17) is positioned at the level of or in said opening (6).

12. The valve device according to any one of Claims 1 to 11, **characterized in that** the first and second volumetric regions (9 and 9') of the second chamber (4') have circular cylindrical forms with symmetry around the axial direction (X).

13. The valve device according to any one of Claims 1 to 12, **characterized in that** the three openings (5', 8 and 8') of the valve body (3) for the outlet of fluid are extended externally by respective connection end fittings, formed integrally with said valve body (3).

14. The valve device according to any one of Claims 1 to 13, **characterized in that** the first inlet opening (5) of the first chamber (4) is surrounded, on the exterior face of the valve body (3), by an attachment plate (19) integrating an added or overmoulded sealing joint (19') and **in that** the first chamber (4) comprises an additional lateral opening (20) that is extended externally by a site (20') for tightly receiving a temperature sensor (21), the sensitive end (21') of which is projecting into said chamber (4) after mounting of said sensor (21).

15. The valve device according to any one of Claims 1 to 14, **characterized in that** the actuator (10) is assembled rigidly with the valve body (3) and consists of a rotary actuator, optionally associated with a position sensor, and comprising a control axle (10') in the form of a threaded rod cooperating with a nut (10") mounted in a manner locked in rotation in the sliding slide (2).

16. The valve device according to any one of Claims 1 to 15, **characterized in that** the valve body (3) is formed by at least two component parts (3', 3") of thermoplastic or thermosetting material, obtained by moulding and assembled in a tight manner by welding, screwing or bonding at the level of an assembly plane, a first part (3') defining for the most part the first chamber (4) and a second part (3") defining the second chamber (4').

17. A circulation circuit of cooling fluid of an internal combustion engine of a motor vehicle, **characterized in that** it includes a valve device (1) according to any one of Claims 1 to 16, in which the first fluid-inlet opening (5) of the first chamber (4) is connected to the water outlet of the cylinder head block of said engine, the second fluid-outlet opening (5') of the first chamber (4) is connected to the circuit supplying the radiator of the vehicle, the first lateral fluid-outlet opening (8) of the second chamber (4') is connected to a first cooling circuit, for example to the circuit supplying the heater of the vehicle, and the second lateral fluid-outlet opening (8') of the second chamber (4') is connected to a second cooling circuit or bypass circuit, optionally supplying at least one heat exchanger.
